# EUROPEAN PATENT SPECIFICATION

(11) **EP 1 701 597 B1**
(45) Date of publication and mention of the grant of the patent: **22.08.2012**
(21) Application number: 04819967.3
(22) Date of filing: 08.12.2004
(51) Int. Cl.: H05H 1/24

(54) **PLASMA GENERATING ELECTRODE, ITS MANUFACTURING METHOD, AND PLASMA REACTOR**
PLASMAERZEUGUNGSELEKTRODE, HERSTELLUNGSVRFAHREN DAFÜR UND PLASMAREAKTOR
ELECTRODE POUR GENERATION DE PLASMA, PROCEDE DE PRODUCTION ASSOCIE ET REACTEUR A PLASMA

(30) Priority: 08.12.2003 JP 2003408712
(43) Date of publication of application: 13.09.2006
(73) Proprietor: NGK Insulators, Ltd., Nagoya-city, Aichi 467-8530 (JP); HONDA MOTOR CO., LTD., Tokyo 107-8556 (JP)
(72) Inventor: KONDO, Atsuo, Aichi 4678530 (JP); FUJIOKA, Yasumasa, Aichi 4678530 (JP); MASUDA, Masaaki, Aichi 4678530 (JP); DOSAKA, Kenji, Aichi 4678530 (JP); KONDO, Kazuhiro, Aichi 4678530 (JP)
(74) Representative: Paget, Hugh Charles Edward
(86) International application number: PCT/JP2004/018287
(87) International publication number: WO 2005/055678

(56) References cited:
- EP-A2- 1 119 016
- JP-A- 54 094 493
- JP-A- 2001 274 103
- JP-A- 2001 314 752
- JP-A- 2003 135 582
- JP-A- 2003 286 829
- US-A- 6 049 086
- US-A1- 2003 180 199

## Description

### TECHNICAL FIELD

The present invention relates to a plasma generating electrode, a method of manufacturing the same, and a plasma reactor. More particularly, the present invention relates to a plasma generating electrode capable of generating high-density plasma with a high energy state, a method of manufacturing the same, and a plasma reactor.

### BACKGROUND ART

A silent discharge occurs when disposing a dielectric between two electrodes secured on each end and applying a high alternating current voltage or a periodic pulsed voltage between the electrodes. In the resulting plasma field, active species, radicals, and ions are produced to promote a gaseous reaction and decomposition. This phenomenon may be utilized to remove toxic components contained in engine exhaust gas or incinerator exhaust gas.

A plasma reactor having a plasma generating electrode has been disclosed which treats nitrogen oxide (NOₓ), carbon particulate matter (PM), hydrocarbon (HC), carbon monoxide (CO), and the like contained in engine exhaust gas or incinerator exhaust gas by causing the engine exhaust gas or incinerator exhaust gas to pass through the plasma field (see patent document 1, for example).

In the method of manufacturing the plasma reactor disclosed in the patent document 1, unevenness is formed on the surface of a dielectric in order to increase the resident time of the toxic substance contained in the exhaust gas to activate the plasma reaction.
[Patent document 1] JP-A-2003-286829, corresponding to US 2003/0180199.

### DISCLOSURE OF THE INVENTION

However, the patent document 1 merely discloses a plasma reactor having opposed dielectric members whose facing surfaces are covered with many embossments (protrusions) to reduce slow speed through the cell. Moreover, even if such protrusions are formed, the resident time of the exhaust gas does not change to a large extent, whereby only a small effect is obtained on the activity of the plasma reaction.

The present invention has been made in view of the above-described problem, and provides a plasma generating electrode capable of generating high-density plasma with a high energy state, a method of manufacturing the same, and a plasma reactor.

Specifically, the present invention provides the plasma generating electrode as set out in claim 1.
Preferably each of the grooves and/or the recesses has a thickness from the surface of the ceramic dielectric to a bottom of the groove and/or the recess of 3 to 200 µm.
Preferably each or the grooves and/or the recesses has a thickness from the surface of the ceramic dielectric to a bottom of the groove and/or the recess of 1/3 or less of an average thickness of the ceramic dielectric.
The invention further provides a plasma reactor comprising the plasma generating electrode of the invention, and a casing having a passage (gas passage) for a gas containing a specific component formed therein, wherein, when the gas is introduced into the gas passage of the casing, the specific component contained in the gas can be reacted using plasma generated by the plasma generating electrode
The plasma reactor preferably further comprises a pulsed power supply for applying a voltage to the plasma generating electrode.
The pulsed power supply may include at least one SI thyristor.
The invention also provides methods of manufacturing a plasma generating electrode of the invention, as set out in claim 7, claim 8, claim 9 and claim 10.

The plasma generating electrode and the plasma reactor according to the present invention can generate high-density plasma with a high energy state between the unit electrodes each of which faces each other. The method of manufacturing a plasma generating electrode according to the present invention allows the above plasma generating electrode to be easily and inexpensively manufactured.

### BRIEF DESCRIPTION OF THE DRAWINGS

FIG 1 is a perspective view schematically showing an example of one embodiment of a plasma generating electrode according to the present invention.
FIG. 2 is a perspective view schematically showing another example of one embodiment of the plasma generating electrode according to the present invention.
FIG. 3(a) is an enlarged view of a groove in another example of one embodiment of the plasma generating electrode according to the present invention.
FIG. 3(b) is an enlarged view of a groove in still another example of one embodiment of the plasma generating electrode according to the present invention.
FIG. 3(c) is an enlarged view of a groove in still another example of one embodiment of the plasma generating electrode according to the present invention.
FIG. 3(d) is an enlarged view of a groove in yet another example of one embodiment of the plasma generating electrode according to the present invention.
FIG. 4 is a perspective view schematically showing another example of one embodiment of the plasma generating electrode according to the present invention.
FIG 5 is a perspective view schematically showing another example of one embodiment of the plasma generating electrode according to the present invention.
FIG. 6 is a perspective view schematically showing another example of one embodiment of the plasma generating electrode according to the present invention.
FIG. 7 is a perspective view schematically showing another example of one embodiment of the plasma generating electrode according to the present invention.
FIG. 8 is a perspective view schematically showing another example of one embodiment of the plasma generating electrode according to the present invention.
FIG. 9 is a perspective view schematically showing yet another example of one embodiment of the plasma generating electrode according to the present invention.
FIG. 10 is a cross-sectional view schematically showing one embodiment of a plasma reactor according to the present invention.
FIG. 11 is a schematic view showing an example of the plasma generating electrode according to the present invention.

### EXPLANATION OF REFERENTIAL NUMBERS

1: plasma generating electrode, 2: unit electrode, 3: ceramic body, 4: conductive film, 5: groove, 6: recess, 7: holding member, 9: edge, 10: opening, 11: electricity supply portion, 12: casing, 13: gas passage, 20: plasma reactor, 21: surface (surface of ceramic dielectric), 22: side surface (side surface of groove and/or recess)

### BEST MODE FOR CARRYING OUT THE INVENTION

Embodiments of a plasma generating electrode, a method of manufacturing the same, and a plasma reactor according to the present invention are described below in detail with reference to the drawings. Note that the present invention should not be construed as being limited to the following embodiments.

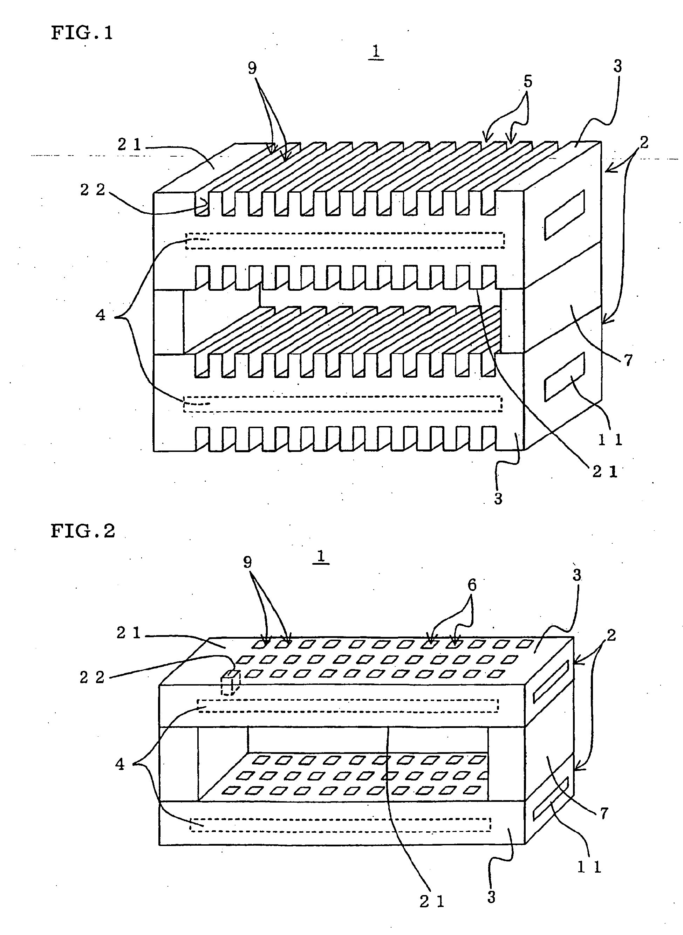

FIG. 1 is an oblique view schematically showing an example of one embodiment of the plasma generating electrode according to the present invention, and FIG. 2 is an oblique view schematically showing another example of one embodiment of the plasma generating electrode according to the present invention. As shown in FIGS. 1 and 2, a plasma generating electrode 1 according to this embodiment is a plasma generating electrode 1 including at least two plate-shaped unit electrodes 2 each of which faces each other and capable of generating plasma upon application of a voltage between the unit electrodes 2, at least one of the unit electrodes 2 each of which faces each other including a plate-shaped ceramic dielectric 3 having a plurality of grooves 5 and/or a plurality of recesses 6 formed in at least one surface, and a conductive film 4 disposed inside the ceramic dielectric 3, the plasma generating electrode 1 capable of generating high-density plasma at edges 9 formed by a surface 21 of the ceramic dielectric 3 and side surfaces 22 of the grooves 5 and/or the recesses 6 upon application of a voltage between the unit electrodes 2, the high-density plasma having a density higher than that of plasma generated between the unit electrodes 2 in an area other than the vicinity of the edge 9. In the plasma generating electrode 1 shown in FIG. 1, the grooves 5 are formed in each surface 21 of the ceramic dielectric 3. In the plasma generating electrode 1 shown in FIG 2, the recesses 6 are formed in each surface 21 of the ceramic dielectric 3. Since the plasma generating electrode 1 according to this embodiment generates high-density plasma in the vicinity of the edge 9, the edge 9 is sharply formed to such an extent that a discharge concentration occurs when applying a voltage between the unit electrodes 2.

When applying a specific voltage between the unit electrodes 2, a discharge occurs between the respective ceramic dielectrics 3 constituting the unit electrodes 2 each of which faces each other, whereby plasma is generated. In the plasma generating electrode 1 shown in FIG. 1, since a discharge concentration occurs in the vicinity of the edge 9 formed by the surface 21 of the ceramic dielectric 3 and the side surface 22 of the groove 5, plasma can be generated which has a density higher than that of plasma generated between the unit electrodes 2 in an area other than the vicinity of the edge 9 (e.g. plasma generated in the vicinity of the surface 21 of the ceramic dielectric 3). The plasma generating electrode 1 according to this embodiment can thus generate high-density plasma at lower energy. This also applies to the case where the recesses 6 are formed in the surfaces 21 of the respective ceramic dielectrics 3 constituting the unit electrodes 2 each of which faces each other, such as in the plasma generating electrode 1 shown in FIG. 2. The plasma generating electrode 1 according to this embodiment may be used for a plasma reactor which allows a gas containing a specific component to be reacted, such as an exhaust gas treatment device which treats soot, nitrogen monoxide, and the like contained in combusted exhaust gas or an ozonizer which produces ozone by reacting oxygen in air or the like.

As shown, in FIGS. 1 and 2, the shape of the grooves 5 and/or the recesses 6 is not particularly limited. For example, the grooves 5 may be formed approximately in parallel in the surface 21 of the ceramic dielectric 3, as shown in FIG. 1, or the recess 6 may be regularly formed in the surface 21 of the ceramic dielectric 3, as shown in FIG. 2. Although FIG.2 illustrates the plasma generating electrode 1. in which the shape of the opening of the recess 6 is quadrilateral and the recesses 6 are formed at equal intervals, the shape of the opening, the interval between the recesses 6, and the like are not particularly limited. For example, the shape of the opening of the recess 6 may be polygonal other than quadrilateral.

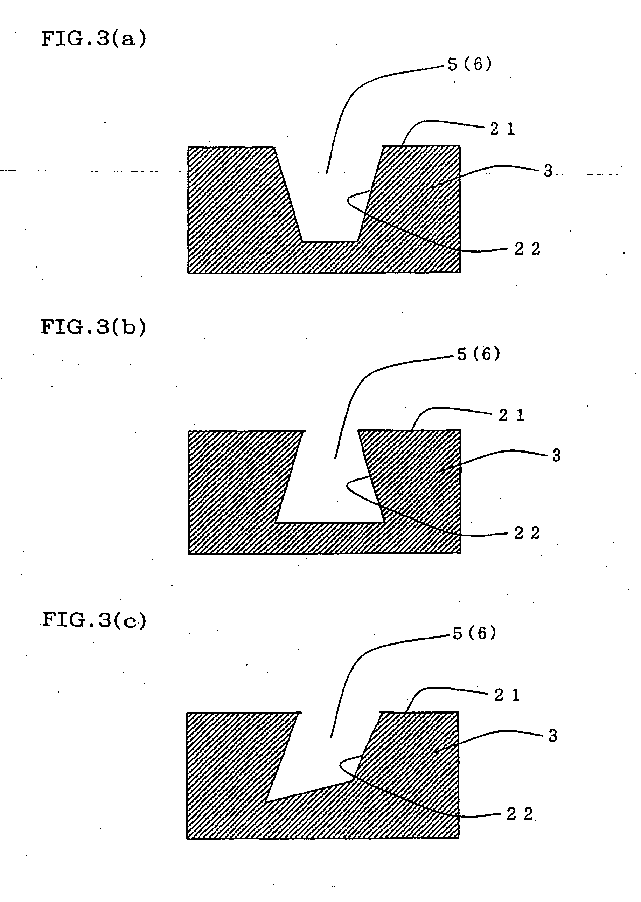

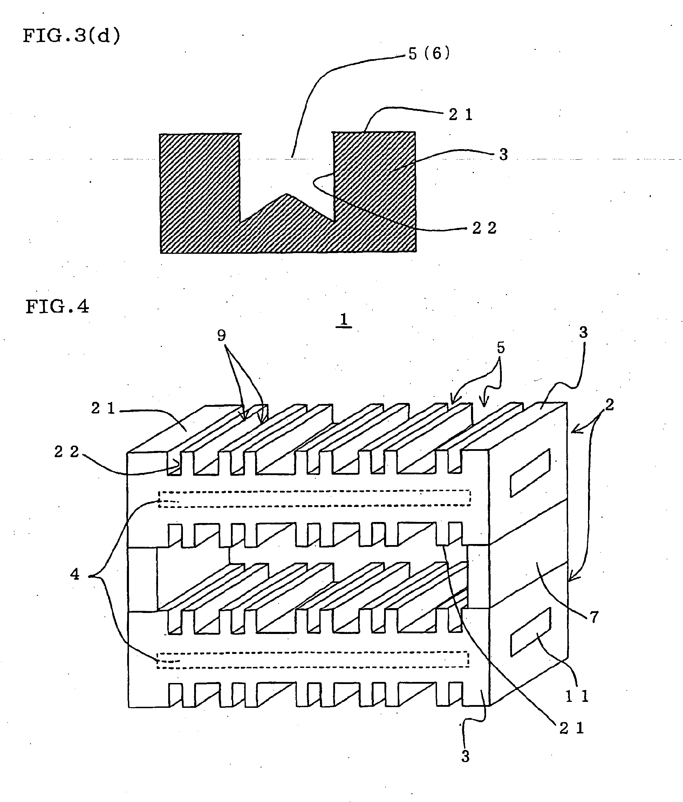

FIGS. 1 and 2 illustrate the grooves 5 and/or the recesses 6 formed so that the side surfaces 22 of the grooves 5 and/or the recesses 6 are vertical to the surface 21 of the ceramic dielectric 3. Note that the shapes of the groove 5 and the recess 6 in the plasma generating electrode 1 according to this embodiment are not limited thereto. As shown in FIGS. 3(a) to 3(d), the grooves 5 and/or the recesses 6 may be formed so that the side surfaces 22 of the grooves 5 and/or the recesses 6 are at a specific angle with the surface 21 of the ceramic dielectric 3, for example. In more detail, the grooves 5 and/or the recesses 6 may be formed so that the shape of the groove 5 (recess 6) in the cross section perpendicular to the surface 21 of ceramic dielectric 3 is trapezoidal, as shown in FIGS. 3(a) and 3(b), or may be formed so that the side surface 22 of the groove 5 (recess 6) is inclined in one direction, shown in FIG. 3(c). As shown in FIG. 3(d), the bottom surface of the groove 5 (recess 6) may be formed by two or more planes. FIGS. 3(a) to 3(d) are enlarged views of the groove in another example of one embodiment of the plasma generating electrode according to the invention (first invention). In FIGS. 3(a) to 3(d), as to elements configured in the same manner as the elements shown in FIGS. 1 and 2, they are indicated by the same referential numbers with the omission of the detailed description thereon.

When the grooves 5 are formed in the surface 21 of the ceramic dielectric 3 as shown in FIG. 1, it is preferable that the width of the groove 5 be 10 to 5000 µm, although the width of the groove 5 is not particularly limited. If the width of the groove 5 is less than 10 µm, a large number of grooves are formed in order to achieve the effects, whereby the plasma generating electrode may not be manufactured at low cost. If the width of the groove 5 is more than 5000 µm, since the percentage of the edges 9 of the grooves 5 occupying the area of the surface 21 of the ceramic dielectric 3 (area when the surface 21 of the ceramic dielectric 3 forms a continuous plane) decreases, the amount of high-density plasma generated decreases, whereby a sufficient effect may not be achieved.

When the recesses 6 are formed in the surface 21 of the ceramic dielectric 3 as shown in FIG. 2, it is preferable that the open area of the recess 6 be 100 to 1×0⁸ µm². If the open area of the recess 6 is less than 100 µm², a large number of recesses are formed in order to achieve the effects, whereby the plasma generating electrode may not be manufactured at low cost. If the open area of the recess 6 is more than 1×0⁸ µm², since the percentage of the edges 9 of the grooves 5 occupying the area of the surface 21 of the ceramic dielectric 3 (area when the surface 21 of the ceramic dielectric 3 forms a continuous plane) decreases, the amount of high-density plasma generated decreases, whereby a sufficient effect may not be achieved.

As shown in FIGS. 1 and 2, since the plasma generating electrode 1 according to this embodiment generates high-density plasma in the vicinity of the edge 9, the edge 9 must be sharply formed to such an extent that a discharge concentration occurs when applying a voltage between the unit electrodes 2. Therefore, the angle of the edge 9 formed by the surface 21 of the ceramic dielectric 3 and the side surface 22 of the groove 5 and/or the recess 6 in the cross section perpendicular to the surface 21 of the ceramic dielectric 3 is preferably 45 to 135 degrees, and still more preferably 80 to 100 degrees. This configuration allows a discharge concentration to effectively occur in the vicinity of the edge 9, whereby high-density plasma can be effectively generated.

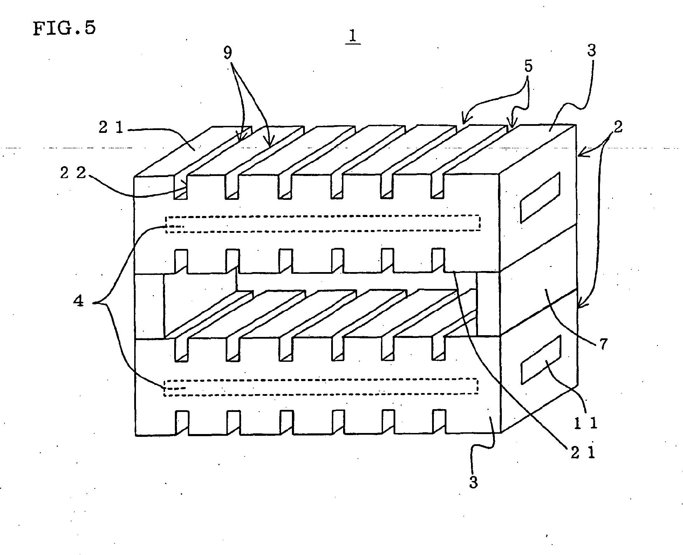

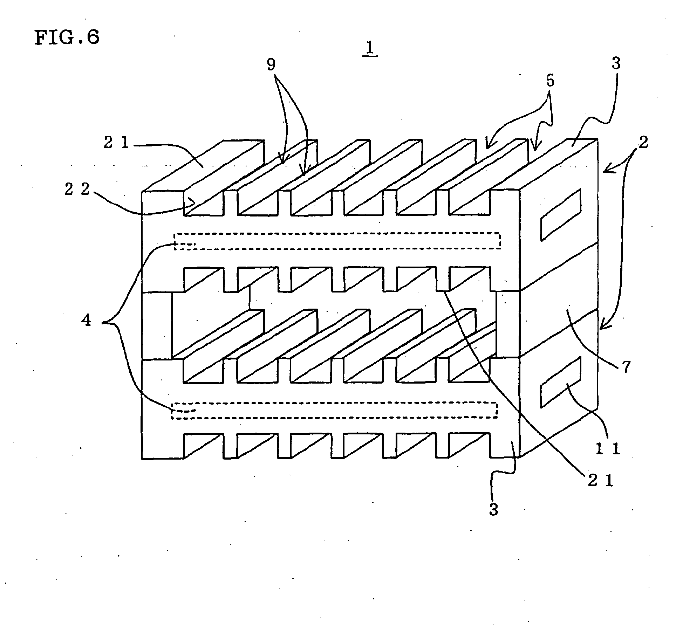

The interval at which the grooves 5 are formed is not particularly limited. As shown in FIG 4, the grooves 5 may be formed at irregular intervals, for example. As shown in FIG. 5, the width of the groove 5 may be comparatively reduced, and the grooves 5 may be formed at large intervals. Or, the grooves 5 may be formed to have a comparatively large width, as shown in FIG. 6. In FIGS. 4 to 6, as to the elements configured in the same manner as the elements of the plasma generating electrode 1 shown in FIG. 1, they are indicated by the same referential numbers with the omission of the detailed description thereon.

In the plasma generating electrode 1 according to this embodiment shown in FIGS. 1 and 2, it is preferable that the grooves 5 and/or the recesses 6 be formed in an area corresponding to 20 to 80% of the area of the surface 21 of the ceramic dielectric 3 assuming that the surface 21 forms a continuous plane. If the grooves 5 and/or the recesses 6 are formed in an area corresponding to less than 20% or more than 80% of the area of the surface 21 of the ceramic dielectric 3 assuming that the surface 21 forms a continuous plane, the percentage of the edges 9 of the grooves 5 and/or the recesses 6 occupying the surface 21 of the ceramic dielectric 3 decreases, whereby the area in which high-density plasma is generated in the vicinity of the edges 9 decreases.

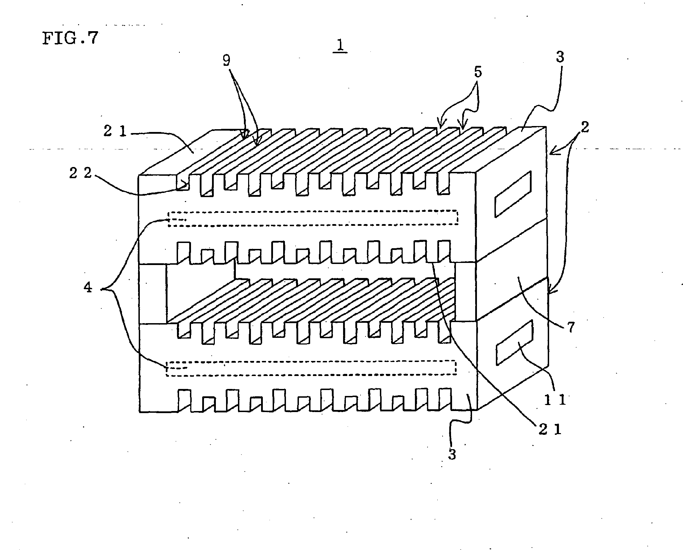

In regard to the depth from the surface of the ceramic dielectric 3 to the bottom surface of the groove 5, the grooves 5 may be formed so that all the grooves 5 have the same depth as shown in FIG. 1, or may be formed so that the grooves 5 have different depths as shown in FIG. 7. The grooves may be formed to have different depths in different ceramic dielectric units (not shown). Likewise, when the recesses 6 are formed in the surface 21 of the ceramic dielectric 3 as shown in FIG. 2, the recesses 6 may be formed so that all the recesses 6 have the same depth from the surface of the ceramic dielectric 3 to the bottom surface of the recess 6, or may be formed so that the recesses 6 have different depths from the surface of the ceramic dielectric 3 to the bottom surface of the recess 6.

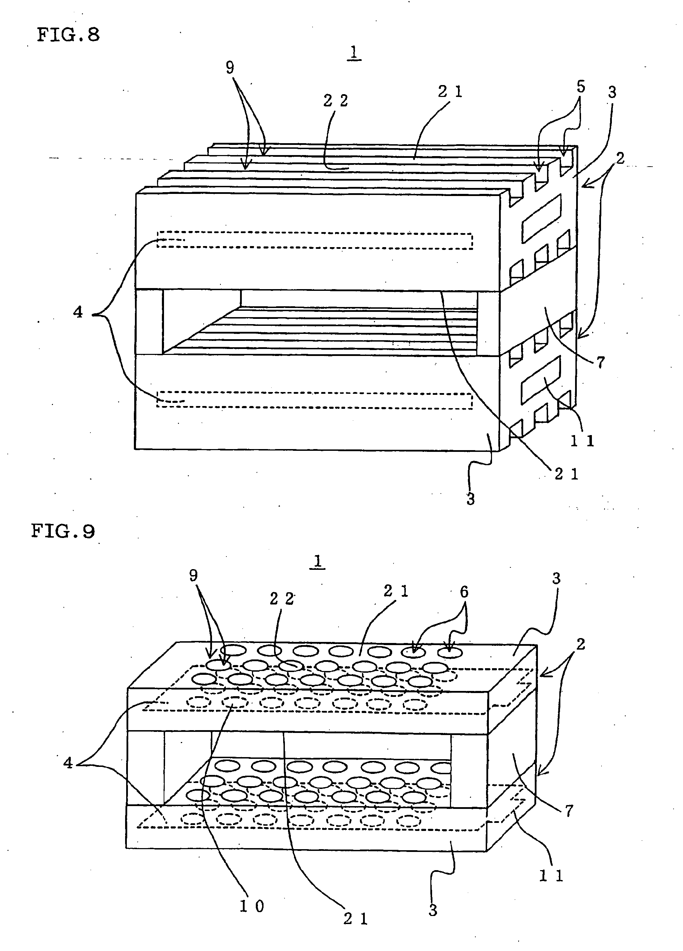

The direction in which the groove 5 is formed in the surface 21 of the ceramic dielectric 3 is not particularly limited. When the plasma generating electrode 1 is used so that a fluid such as exhaust gas passes through plasma generated between the unit electrodes 2, the grooves 5 may be formed in the direction in which the plasma generating space is formed through the plasma generating electrode 1 (e.g. along the fluid flow direction) as shown in FIG. 1, or may be formed in the direction which intersects the direction in which the plasma generating space is formed through the plasma generating electrode 1 as shown in FIG 8. In FIG 8, as to the elements configured in the same manner as the elements of the plasma generating electrode 1 shown in FIG 1, they are indicated by the same referential numbers with the omission of the detailed description thereon.

In the plasma generating electrode 1 according to this embodiment shown in FIG. 1 or 2, it is preferable that the depth from the surface 21 of the ceramic dielectric 3 to the bottom of the groove 5 and/or the recess 6 be 3 to 200 µm. If the depth of the groove 5 and/or the recess 6 is less than 3 µm, the difference from the case where the surface 21 of the ceramic dielectric 3 is flat decreases, whereby the effect of generating high-density plasma in the vicinity of the edge 9 may not be sufficiently obtained. If the depth of the groove 5 and/or the recess 6 is more than 200 µm, the mechanical strength of the ceramic dielectric 3 decreases, whereby breakage or the like may occur.

In the plasma generating electrode 1 according to this embodiment, it is preferable that the depth from the surface 21 of the ceramic dielectric 3 of the unit electrode 2 to the bottom of the groove 5 and/or the recess 6 be 1/3 or less of the average thickness of the ceramic dielectric 3. If the depth of the groove 5 and/or the recess 6 is more than 1/3 of the average thickness of the ceramic dielectric 3, the mechanical strength of the ceramic dielectric 3 decreases, whereby breakage or the like may occur. The average thickness of the ceramic dielectric 3 may be calculated by dividing the total volume of the ceramic dielectric 3 by the area of one surface of the ceramic dielectric 3, that is, the surface formed by the longest side and the second longest side of the surface 21 of the ceramic dielectric 3 assuming that the surface forms a continuous plane, for example. Since the volume of the conductive film 4 disposed inside the ceramic dielectric 3 is sufficiently smaller than the volume of the ceramic dielectric 3, it is also possible to use the total volume of the unit electrode 2 as an approximate value when calculating the total volume of the ceramic dielectric 3.

The material for the ceramic dielectric 3 used for the plasma generating electrode 1 according to this embodiment is not particularly limited insofar as the material can be suitably used as a dielectric. It is preferable that the ceramic dielectric 3 include at least one compound selected from the group consisting of aluminum oxide, magnesium oxide, silicon oxide, silicon nitride, aluminum nitride, mullite, cordierite, magnesium-calcium-titanium type oxide, barium-titanium-zinc type oxide, and barium-titanium type oxide, for example. If the ceramic dielectric 3 includes such a compound, a ceramic dielectric 3 exhibiting excellent thermal shock resistance can be obtained. The ceramic dielectric 3 used in this embodiment may be formed using a tape-shaped unfired ceramic formed body, such as a ceramic green sheet. The ceramic dielectric 3 may also be formed using a sheet obtained by extrusion. A flat plate formed by powder dry pressing may also be used.

A specific method of forming the grooves 5 and/or the recesses 6 is described in detail later when describing methods of manufacturing a plasma generating electrode. The grooves 5 and/or the recesses 6 may be formed by machining the surface of the ceramic dielectric 3 obtained by firing using slicing, dicing, processing using ultrasonic horns, or the like, or may be formed in the surface of an unfired ceramic green sheet (unfired ceramic formed body) using a die corresponding to the shape of the groove 5 or the recess 6, for example. Or, a ceramic green sheet (unfired ceramic formed body) having the recesses 6 formed in the surface may also be used which is prepared by stacking a ceramic green sheet in which a number of holes are formed by punching (hereinafter may be called "punched ceramic green sheet") and a plate-shaped ceramic green sheet. When forming the recesses 6 using such a punched ceramic green sheet, a ceramic green sheet prepared by stacking the punched ceramic green sheet and one or more plate-shaped ceramic green sheets in advance may be used, or a ceramic green sheet prepared by disposing the conductive film 4 on the plate-shaped ceramic green sheet and stacking the punched ceramic green sheet, a ceramic green sheet in which the punched ceramic green sheet and another plate-shaped ceramic green sheet are stacked, or the like on the surface of the plate-shaped ceramic green sheet opposite to the surface on which the conductive film 4 is disposed. Or, a ceramic green sheet prepared by stacking two plate-shaped ceramic green sheets so that the conductive film 4 is covered, and stacking the punched ceramic green sheet or the like on at least one of the surfaces opposite to the surfaces on which the conductive film 4 is disposed. In the plasma generating electrode 1 shown in FIG. 9, the conductive film 4 is disposed on the surface of a ceramic green sheet (unfired ceramic formed body) so that a number of openings 10 are formed through the conductive film 4 in its thickness direction, and a ceramic green sheet (unfired ceramic formed body) is allowed to enter the openings 10 in the disposed conductive film 4 to form the recesses 6 corresponding to the shape of the openings 10. FIG. 9 illustrates the plasma generating electrode 1 in which the recesses 6 are formed in the surface 21 of the ceramic dielectric 3. Note that the openings 10 may be formed in the shape of grooves so that the grooves 5 (see FIG. 1) are formed. This configuration not only allows the grooves 5 (see FIG. 1) or the recesses 6 to be formed by the openings 10 in the conductive film 4, but also allows a comparatively strong discharge to occur on the outer circumferential portion of the opening 10. Therefore, uniform and stable plasma can be generated at low power consumption using such a conductive film 4.

In the plasma generating electrodes 1 shown in FIGS. 1 to 9, the grooves 5 and/or the recesses 6 are formed in each surface 21 of the plate-shaped ceramic dielectric 3. In the plasma generating electrode 1 according to this embodiment, it suffices that the grooves 5 and/or the recesses 6 be formed in at least one surface 21. In the plasma generating electrodes 1 shown in FIGS. 1 to 9, the grooves 5 and/or the recesses 6 are formed in at least one surface 21 of the unit electrodes 2 each of which faces each other. In the plasma generating electrode 1 according to this embodiment, it suffices that the grooves 5 and/or the recesses 6 be formed in at least one surface 21 of at least one of the unit electrodes 2 each of which faces each other (not shown). In this case, a known electrode such as a metal plate may be suitably used as the other of the unit electrodes each of which faces each other.

As shown in FIGS. 1 to 9, the conductive film 4 of the unit electrode 2 is not particularly limited insofar as plasma can be generated by applying a voltage between the unit electrodes 2. It is preferable that the conductive film 4 include at least one metal selected from the group consisting of tungsten, molybdenum, manganese, chromium, titanium, zirconium, nickel, iron, silver, copper, platinum, and palladium.

The method of disposing the conductive film 4 is not particularly limited. It is preferable to form the conductive film 4 by applying the conductive film 4 to the ceramic dielectric 3. As preferable examples of a specific application method, screen printing, calender rolling, spraying, electrostatic painting, dip coating, knife coating, chemical vapor deposition, physical vapor deposition, and the like can be given, According to these methods, a thin conductive film 4 exhibiting excellent surface flatness after application can be easily formed. It is preferable that the conductive film 4 include a electricity supply portion 11 which is not covered with the ceramic dielectric 3 so that a voltage can be directly applied from the outside of the unit electrode 2.

As shown in FIGS. 1 to 9, the unit electrode 2 of the plasma generating electrode 1 according to this embodiment is held by a holding member 7 on at least one end. The material for the holding member 7 is not particularly limited insofar as the unit electrodes 2 can be suitably held in a state in which the unit electrodes 2 are separated at an specific interval. It is preferable that the holding member 7 include at least one compound selected from the group consisting of aluminum oxide, magnesium oxide, silicon oxide, silicon nitride, zirconia, mullite, cordierite, and crystallized glass. It is preferable that the holding member 7 exhibit electric insulating properties from the viewpoint of preventing a local creeping discharge.

A first embodiment of a method of the invention for manufacturing a plasma generating electrode is described below. The method of manufacturing a plasma generating electrode according to this embodiment is a method of manufacturing a plasma generating electrode including at least two plate-shaped unit electrodes each of which faces each other and capable of generating plasma upon application of a voltage between the unit electrodes, the method including forming a ceramic raw material in a shape of a plate to obtain a plurality of unfired ceramic formed bodies, disposing a conductive film on one surface of a specific unfired ceramic formed body of the resulting unfired ceramic formed bodies to obtain a conductive-film-containing ceramic formed body, stacking the other unfired ceramic formed body on the resulting conductive-film-containing ceramic formed body so that the conductive film is covered to obtain a plate-shaped unit electrode precursor, forming a plurality of grooves and/or a plurality of recesses in at least one surface of the resulting unit electrode precursor to obtain a groove and/or recess-containing unit electrode precursor having the grooves and/or the recesses formed in at least one surface, firing the resulting groove and/or recess-containing unit electrode precursor to obtain a groove and/or recess-containing unit electrode including a plate-shaped ceramic dielectric having the grooves and/or the recesses formed in at least one surface and the conductive film disposed inside the ceramic dielectric, and disposing the resulting groove and/or recess-containing unit electrode to be at least one of the unit electrodes each of which faces each other of the plasma generating electrode. This configuration allows the plasma generating electrode 1 as shown in FIG. 1 which can generate high-density plasma to be easily manufactured at low cost.

Each step is described below. First, unfired ceramic formed bodies forming the ceramic dielectric of the plasma generating electrode are formed. As the unfired ceramic formed bodies, known ceramic green sheets may be suitably used. Specifically, slurry is prepared by mixing a specific ceramic powder with an appropriate binder, sintering agent, plasticizer, dispersant, organic solvent, and the like. As the ceramic powder, powder of aluminum oxide, mullite, cordierite, silicon nitride, aluminum nitride, or the like may be suitably used. The sintering agent is preferably added in an amount of 3 to 10 parts by weight for 100 parts by weight of the ceramic powder. As the plasticizer, dispersant, and organic solvent, a plasticizer, dispersant, and organic solvent used for known slurry used to form a ceramic green sheet may be suitably used. The slurry may be in the form of paste.

The resulting slurry is formed to a specific thickness by a known method such as a doctor blade method, a calendering method, a printing method, or a reverse roll coating method to form unfired ceramic formed bodies. The resulting unfired ceramic formed bodies may be subjected to cutting, grinding, punching, or through hole formation, or may be used as an integral laminate in which the unfired ceramic formed bodies are stacked and bonded by thermocompression bonding or the like. The unfired ceramic formed bodies are stacked in two or more layers in a state in which the conductive film is placed therebetween and fired to form a ceramic dielectric. The unfired ceramic formed bodies may be formed to have approximately the same size or thickness, or may be formed to have different sizes or thicknesses.

A conductive paste for forming the conductive film is separately prepared. The conductive paste may be prepared by adding a binder and a solvent such as terpineol to molybdenum powder and sufficiently kneading the mixture using a triple roll mill, for example. An additive may be arbitrarily added to the conductive paste in order to improve the adhesion to the unfired ceramic formed body and to improve the sintering properties.

The resulting conductive paste is disposed on the surface of a specific unfired ceramic formed body of the unfired ceramic formed bodies by screen printing or the like to form a conductive film having a specific shape to obtain a conductive-film-containing ceramic formed body. The conductive film may be disposed by calender rolling, spraying, electrostatic painting, dip coating, knife coating, chemical vapor deposition, physical vapor deposition, or the like.

The conductive-film-containing ceramic formed body and the unfired ceramic formed body other than the specific unfired ceramic formed body are stacked so that the conductive film of the conductive-film-containing ceramic formed body is covered to obtain a unit electrode precursor having the conductive film disposed therein. It is preferable to stack the unfired ceramic formed bodies at a temperature of 100°C while applying a pressure of 10 MPa.

A plurality of grooves and/or a plurality of recesses are formed in at least one surface of the resulting unit electrode precursor to obtain a groove and/or recess-containing unit electrode precursor in which a plurality of grooves and/or a plurality of recesses are formed in at least one surface. As a specific method, the grooves and/or the recesses may be formed in at least one surface of the unit electrode precursor using a die corresponding to the shape of the groove or the recess, for example. Or, an unfired ceramic formed body in which holes are formed by punching may be prepared, and the grooves and/or the recesses may be formed by disposing the resulting unfired ceramic formed body on at least one surface of the unit electrode precursor. Or, an unfired ceramic formed body in which holes are formed may be stacked on a plate-shaped unfired ceramic formed body to form an unfired ceramic formed body having recesses, and the resulting unfired ceramic formed body may be disposed on at least one surface of the unit electrode precursor. When forming the groove or the recess using an unfired ceramic formed body in which holes are formed, the method of forming the holes and the like are not particularly limited. As disclosed in JP-A-2001-62784, when forming holes having a small diameter "d" at a small interval "a" by punching, a method may be preferably used in which at least two holes including a hole having the small diameter "d" using a die punch at an interval "A" at least twice the small interval "a", and a hole is formed between the holes formed at the interval "A" at least at the small interval "a" from the hole having the small diameter "d" without removing the punch, for example. As the punching die used for punching, a punching die for a simultaneous punching-lamination process including a punch and a die for punching a workpiece and a stripper for guiding the punch, in which the punched workpiece is laminated using the punch as the laminating axis, the punching die further including adjustment means A which can change the relative position of the punch and the stripper when an upper mold containing the punch and a lower mold containing the die are separated, and adjustment means B which can change the clearance between the die and stripper during punching, as disclosed in JP-A-2003-145494, may be suitably used. A hole or the like can be easily formed in the unfired ceramic formed body by using such a hole formation method and punching die, whereby the grooves or the recesses can be easily formed.

In the method of manufacturing a plasma generating electrode according to this embodiment, since a relatively soft unfired ceramic formed body forming the unfired unit electrode precursor is processed, the grooves and/or recesses can be easily formed. It is preferable that the shape of the groove and/or the recess to be formed and the like be the same as the shape of the groove and/or the recess and the like described in the embodiment of the plasma generating electrode according to the first invention.

The groove and/or recess-containing unit electrode precursor in which grooves and/or recesses are formed in at least one surface is obtained in this manner, and the resulting groove and/or recess-containing unit electrode precursor is fired to obtain a groove and/or recess-containing unit electrode. This groove and/or recess-containing unit electrode forms at least one of the unit electrodes of the plasma generating electrode. The groove and/or recess-containing unit electrodes are formed by the above-described method in a number necessary for the plasma generating electrode. As the firing method used in this embodiment, a firing method used when manufacturing a known ceramic may be suitably used, for example.

A holding member for holding the unit electrodes of the plasma generating electrode at a specific interval is separately formed. In the method of manufacturing a plasma generating electrode according to this embodiment, the method of forming the holding member is not particularly limited. For example, the holding member may be formed by press forming a mixed powder of zirconia powder and an organic binder, subjecting the resulting product to binder prefiring and firing, and arbitrarily performing final dimensional finishing by grinding.

The unit electrodes are held at a specific interval using the resulting holding member so that the resulting groove and/or recess-containing unit electrode is used as at least one of the unit electrodes each of which faces each other to obtain a plasma generating electrode. In this case, the groove and/or recess-containing unit electrodes may be used as both of the unit electrodes each of which faces each other, or the groove and/or recess-containing unit electrode may be used as one of the unit electrodes each of which faces each other, and a known electrode such as a metal plate may be used as the other electrode. The above-described configuration allows the plasma generating electrode 1 as shown in FIG. 1 to be easily manufactured at low cost.

A second embodiment of a method of manufacturing a plasma generating electrode according to the invention is described below. The method of manufacturing a plasma generating electrode according to this embodiment is a method of manufacturing a plasma generating electrode including at least two plate-shaped unit electrodes each of which faces each other and capable of generating plasma upon application of a voltage between the unit electrodes, the method including forming a ceramic raw material in a shape of a plate to obtain a plurality of unfired ceramic formed bodies, forming a plurality of grooves and/or a plurality of recesses in at least one surface of a specific unfired ceramic formed body of the resulting unfired ceramic formed bodies and disposing a conductive film on the other surface to obtain a groove and/or recess-containing conductive-film-containing ceramic formed body, stacking the other unfired ceramic formed body on the resulting groove and/or recess-containing conductive-film-containing ceramic formed body so that the conductive film is covered to obtain a groove and/or recess-containing unit electrode precursor having the grooves and/or the recesses formed in at least one surface, firing the resulting groove and/or recess-containing unit electrode precursor to obtain a groove and/or recess-containing unit electrode including a plate-shaped ceramic dielectric having the grooves and/or the recesses formed in at least one surface and the conductive film disposed inside the ceramic dielectric, and disposing the resulting groove and/or recess-containing unit electrode to be at least one of the unit electrodes each of which faces each other of the plasma generating electrode.

In the method of manufacturing a plasma generating electrode according to this embodiment, unfired ceramic formed bodies are obtained by the same method as in the first embodiment of the method of the invention.

Grooves and/or recesses are formed in at least one surface of a specific unfired ceramic formed body of the resulting unfired ceramic formed bodies and a conductive film is disposed on the other surface to obtain a groove and/or recess-containing conductive-film-containing ceramic formed body. In the embodiment of the third invention, grooves and/or recesses are formed in at least one surface of the unit electrode precursor. In this embodiment, grooves and/or recesses are formed in the surface of the unfired ceramic formed body. As the method of forming the grooves and/or recesses, a method similar to the method described in the embodiment of the third invention may be used. For example, the grooves and/or recesses may be formed using a die corresponding to the shape of the groove or the recess. Or, an unfired ceramic formed body in which holes are formed by punching may be prepared, and grooves or recesses may be formed by stacking the unfired ceramic formed body in which the holes are formed on a plate-shaped unfired ceramic formed body. The conductive film may be disposed by preparing conductive paste by the method described in the first embodiment of the method, and disposing the conductive paste by the method described in the first embodiment of the method.

The order of the step of forming the grooves and/or the recesses and the step of disposing the conductive film is arbitrary. Or, these steps may be performed at the same time.

The other unfired ceramic formed body is stacked on the resulting groove and/or recess-containing conductive-film-containing ceramic formed body so that the conductive film is covered to obtain a groove and/or recess-containing unit electrode precursor in which grooves and/or recesses are formed in at least one surface. When stacking the other unfired ceramic formed body, the other unfired ceramic formed body in the shape of a plate may be directly stacked to obtain a groove and/or recess-containing unit electrode precursor in which grooves and/or recesses are formed in only one surface, or a groove and/or recess-containing unfired ceramic formed body obtained by forming grooves and/or recesses in the surface of the other unfired ceramic formed body opposite to the stacking surface to a groove and/or recess-containing unit electrode precursor in which grooves and/or recesses are formed in each surface.

The steps after obtaining the groove and/or recess-containing unit electrode precursor are performed in the same manner as in the first embodiment of the method to obtain a plasma generating electrode. The above-described configuration allows the plasma generating electrode 1 as shown in FIG. 1 to be easily manufactured at low cost.

A third embodiment of a method of manufacturing a plasma generating electrode according to the invention is described below. The method of manufacturing a plasma generating electrode according to this embodiment is a method of manufacturing a plasma generating electrode including at least two plate-shaped unit electrodes each of which faces each other and capable of generating plasma upon application of a voltage between the unit electrodes, the method including forming a ceramic raw material in a shape of a plate to obtain a plurality of unfired ceramic formed bodies, disposing a conductive film on one surface of a specific unfired ceramic formed body of the resulting unfired ceramic formed bodies to obtain a conductive-film-containing ceramic formed body, stacking the other unfired ceramic formed body on the resulting conductive-film-containing ceramic formed body so that the conductive film is covered to obtain a plate-shaped unit electrode precursor, firing the resulting unit electrode precursor and then forming a plurality of grooves and/or a plurality of recesses in at least one surface of the fired unit electrode precursor to obtain a groove and/or recess-containing unit electrode including a plate-shaped ceramic dielectric having the grooves and/or the recesses formed in at least one surface and the conductive film disposed inside the ceramic dielectric, and disposing the resulting groove and/or recess-containing unit electrode to be at least one of the unit electrodes each of which faces each other of the plasma generating electrode. This configuration allows the plasma generating electrode 1 as shown in FIG. 1 to be easily obtained at low cost. In the manufacturing method according to the first embodiment of the method, the grooves and/or the recesses are formed before firing the unit electrode precursor. In the manufacturing method according to this embodiment, the grooves and/or the recesses are formed in the surface of the unit electrode precursor after firing the unit electrode precursor. This configuration improves the accuracy of the shape of the grooves and/or the recesses. The method of forming the grooves and/or the recesses is not particularly limited. Machining such as slicing, dicing, or processing using ultrasonic horns can be given as preferable examples.

The manufacturing method according to this embodiment can be implemented in the same manner as the method described in the first embodiment of the method except for the step of forming the grooves and/or recesses after firing the unit electrode precursor. It is preferable that the shape of the groove and/or the recess to be formed and the like be the same as the shape of the groove and/or the recess and the like described in the embodiment of the plasma generating electrode according to the invention.

A fourth embodiment of a method of manufacturing a plasma generating electrode according to the invention is described below. The method of manufacturing a plasma generating electrode according to this embodiment is a method of manufacturing a plasma generating electrode including at least two plate-shaped unit electrodes each of which faces each other and capable of generating plasma upon application of a voltage between the unit electrodes, the method including forming a ceramic raw material in a shape of a plate to obtain a plurality of unfired ceramic formed bodies, disposing a conductive film having a plurality of openings formed therethrough in its thickness direction on one surface of a specific unfired ceramic formed body of the resulting unfired ceramic formed bodies to obtain a conductive-film-containing ceramic formed body, stacking the other unfired ceramic formed body on the resulting conductive-film-containing ceramic formed body so that the conductive film is covered to obtain a plate-shaped unit electrode precursor, firing the resulting unit electrode precursor to obtain a groove and/or recess-containing unit electrode including a plate-shaped ceramic dielectric having in at least one surface a plurality of grooves and/or a plurality of recesses corresponding to a shape of the openings in the conductive film and the conductive film disposed inside the ceramic dielectric, and disposing the resulting groove and/or recess-containing unit electrode to be at least one of the unit electrodes each of which faces each other of the plasma generating electrode. This configuration allows the plasma generating electrode 1 as shown in FIG. 9 to be easily manufactured at low cost.

In the method of manufacturing a plasma generating electrode according to this embodiment, unfired ceramic formed bodies are obtained by the same method as in first embodiment of the method.

A conductive film having openings formed therethrough in its thickness direction is disposed on one surface of a specific unfired ceramic formed body of the resulting unfired ceramic formed bodies to obtain a conductive-film-containing ceramic formed body. The conductive film may be disposed by calender rolling, spraying, electrostatic painting, dip coating, knife coating, chemical vapor deposition, physical vapor deposition, or the like. When stacking the conductive-film-containing ceramic formed body in which the openings are formed in the conductive film and the other unfired ceramic formed body, the unfired ceramic formed body is formed so that the openings in the conductive film are filled therewith, whereby grooves and/or recesses corresponding to the shape of the openings in the conductive film are formed in the surface of the unit electrode precursor. The unit electrode precursor is then fired in the same manner as in the first embodiment of the method of manufacturing a plasma generating electrode of the invention to obtain a plasma generating electrode as shown in FIG. 9 including the unit electrode 2 including the plate-shaped ceramic dielectric 3 having grooves and/or recesses 6 (only the recesses 6 are formed in FIG. 8) corresponding to the shape of the openings 10 in the conductive film 4 in at least one surface 21 and the conductive film 4 disposed inside the ceramic dielectric 3.

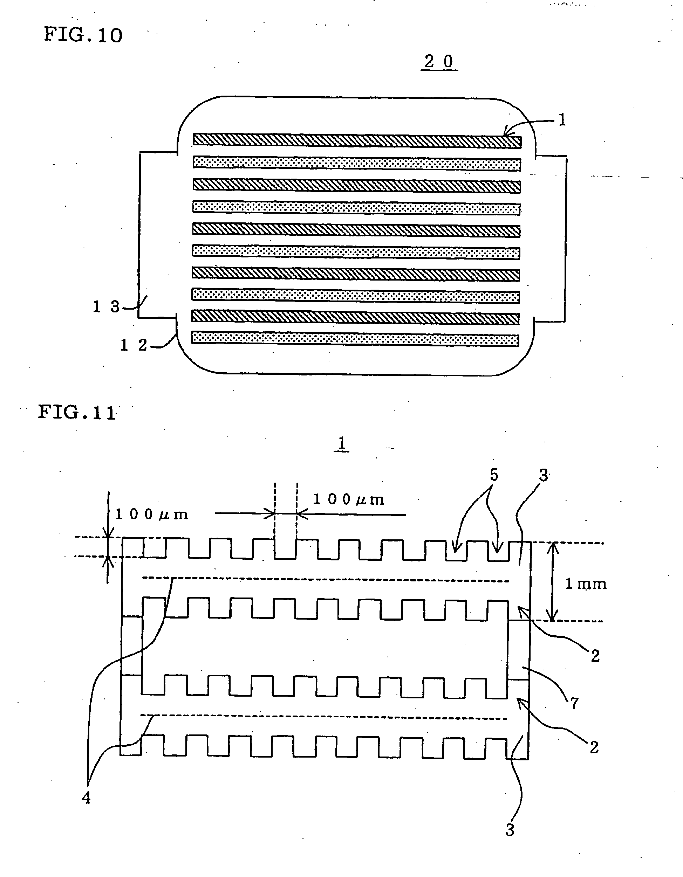

One embodiment of a plasma reactor according to the invention is described below. FIG. 10 is a cross-sectional view schematically showing the configuration of the plasma reactor according to this embodiment. As shown in FIG. 10, a plasma reactor 20 according to this embodiment includes one embodiment (plasma generating electrode 1) of the plasma generating electrode according to the present invention as shown in FIG. 1, and a casing 12 having a passage (gas passage 13) for a gas containing a specific component formed therein, in which, when the gas is introduced into the gas passage 13 of the casing 12, the specific component contained in the gas can be reacted using plasma generated by the plasma generating electrode 1. Since the plasma reactor 20 according to this embodiment includes the plasma generating electrode 1 according to the first invention, high-density plasma can be generated. For example, when using the plasma reactor 20 as an exhaust gas treatment device, exhaust gas can be efficiently treated at low energy.

The material for the casing 12 forming the plasma reactor 20 according to this embodiment is not particularly limited. For example, it is preferable that the material for the casing 12 be ferritic stainless steel having excellent conductivity, being lightweight and inexpensive, and showing only a small amount of deformation due to thermal expansion.

The plasma reactor according to this embodiment may include a power supply (not shown) for applying a voltage to the plasma generating electrode. As the power supply, a known power supply may be suitably used insofar as it can supply a current which causes plasma to be effectively generated. It is preferable that the power supply be a pulsed power supply. It is still more preferable that the power supply include at least one SI thyristor. Plasma can be more efficiently generated by using such a power supply.

The plasma reactor according to this embodiment may be configured so that current is supplied from an external power supply instead of providing a power supply in the plasma reactor.

The current supplied to the plasma generating electrode forming the plasma reactor may be appropriately selected depending on the intensity of plasma to be generated. When installing the plasma reactor in an automotive exhaust system, it is preferable that the current supplied to the plasma generating electrode be a direct current at a voltage of 1 kV or more, a pulsed current having a peak voltage of 1 kV or more and a pulse rate per second of 100 or more (100 Hz or more), an alternating current having a peak voltage of 1 kV or more and a frequency of 100 or more (100 Hz or more), or a current generated by superimposing two of these currents. This configuration allows plasma to be efficiently generated.

A toxic substance (e.g. nitrogen oxide) contained in exhaust gas can be more effectively removed by disposing the plasma reactor according to this embodiment and a catalyst in an exhaust system through which gas discharged from an automotive engine or the like passes.

As the catalyst used together with the plasma reactor according to this embodiment, a catalyst formed by causing at least one element selected from platinum (Pt), palladium (Pd), rhodium (Rh), gold (Au), silver (Ag), copper (Cu), iron (Fe), nickel (Ni), iridium (Ir), and gallium (Ga) to be supported on a porous carrier may be suitably used.

### EXAMPLES

The present invention is described below in more detail by way of examples. Note that the present invention is not limited to the following examples.

### (Example 1)

The plasma generating electrode 1 as shown in FIG. 11 including the plate-shaped ceramic dielectric 3 in which the grooves 5 were formed in the surface and the conductive film 4 disposed inside the ceramic dielectric 3 was provided. The plasma generating electrode 1 was disposed in a casing having a passage for a gas containing a specific component to obtain a plasma reactor (Example 1). In the plasma generating electrode 1 used in Example 1, the grooves 5 with a width of 100 µm and a depth of 100 µm were formed in each side of the ceramic dielectric 3 with a thickness of 1 mm in an area corresponding to 50% of the area of the surface of the ceramic dielectric 3 assuming that the surface forms a continuous plane. The average thickness of the ceramic dielectric 3 of the plasma generating electrode 1 used in Example 1 was 0.9 mm.

Combusted exhaust gas discharged from a propane gas burner was caused to pass through the plasma reactor of Example 1 at a gas flow rate of 1.0 Nm³/min. As a result, nitrogen monoxide contained in the exhaust gas was converted into nitrogen dioxide at a percentage of 82 vol%, and soot contained in the exhaust gas was removed (oxidized) at a percentage of 58 wt%.

### (Comparative Example 1)

A plasma generating electrode including a plate-shaped ceramic dielectric having a flat surface and a conductive film disposed inside the ceramic dielectric was provided. The plasma generating electrode was disposed in a casing having a passage for a gas containing a specific component to obtain a plasma reactor (Comparative Example 1). The thickness of the ceramic dielectric of the plasma generating electrode used in Comparative Example 1 was 1 mm.

Exhaust gas was caused to pass through the plasma reactor in the same manner as in Example 1. As a result, nitrogen monoxide was converted into nitrogen dioxide at a percentage of 68 vol%, and soot was removed at a percentage of 41 wt%. These values are lower than those of Example 1 to indicate the plasma reactor of Comparative Example 1 cannot sufficiently treat the exhaust gas.

### (Comparative Example 2)

A plasma generating electrode including a plate-shaped ceramic dielectric having protrusions formed on the surface and a conductive film disposed inside the ceramic dielectric was prepared. The plasma generating electrode was disposed in a casing having a passage for a gas containing a specific component to obtain a plasma reactor (Comparative Example 1). The thickness of the ceramic dielectric of the plasma generating electrode used in Comparative Example 2 was 1 mm, and the height of the protrusions was 100 µm.

Exhaust gas was caused to pass through the plasma reactor in the same manner as in Example 1. As a result, nitrogen monoxide was converted into nitrogen dioxide at a percentage of 70 vol%, and soot was removed at a percentage of 42 wt%. These values are lower than those of Example 1 to indicate the plasma reactor of Comparative Example 2 cannot sufficiently treat the exhaust gas.

### (Example 2)

A catalyst was disposed downstream of the plasma reactor of Example 1, and the NOₓ purification performance of the plasma reactor was evaluated. As the catalyst, a catalyst powder prepared by causing commercially-available γ-Al₂O₃ to be impregnated with 5 wt% of Pt was supported on a cordierite ceramic honeycomb structure. The catalyst had a columnar shape with a diameter of 1 inch (about 2.54 cm) and a length of 60 mm. The number of cells of the ceramic honeycomb structure was 400, and the thickness (rib thickness) of the partition walls partitioning the cells was 4 mil (about 0.1 mm). The plasma generation conditions and the exhaust gas passage conditions were the same as those of Example 1.

As a result, NO contained in the exhaust gas was purified at a percentage of 80 vol% as NOₓ after causing the exhaust gas to pass through the plasma reactor and the catalyst.

### (Comparative Example 3)

A catalyst was disposed downstream of the plasma reactor of Comparative Example 1, and the NOₓ purification performance of the plasma reactor was evaluated. As the catalyst, the catalyst used in Example 2 was used. The plasma generation conditions and the gas passage conditions were the same as those of Comparative Example 1.

In Comparative Example 3, NO contained in the exhaust gas was purified at a percentage of only 65 vol% as NOₓ.

### INDUSTRIALAPPLICABILITY

Since the plasma generating electrode and the plasma reactor according to the present invention can generate high-density plasma with a high energy state, the plasma generating electrode and the plasma reactor can be suitably used for an exhaust gas treatment device or the like which treats a specific component contained in exhaust gas or the like. The method of manufacturing a plasma generating electrode according to the present invention allows the above plasma generating electrode to be easily and inexpensively manufactured.

## Claims

1. A plasma generating electrode comprising at least two plate-shaped unit electrodes (2) each of which faces the other and which are capable of generating plasma upon application of a voltage between the unit electrodes, at least one of the unit electrodes including a plate-shaped ceramic dielectric (3) having a plurality of grooves (5) and/or a plurality of receses (6) formed in at least one surface, and a conductive film (4) disposed inside the ceramic dielectric, the plasma generating electrode thus being capable of generating high-density plasma in the vicinity of edges (9) formed by a surface of the ceramic dielectric (3) and side surfaces of the grooves (5) and/or the recesses (6) upon application of a voltage between the unit electrodes, the high-density plasma having a density higher than that of plasma generated between the unit electrodes in an area other than the vicinity of the edges,
wherein the grooves (5) and/or the recesses (6) are formed in an area corresponding to 20 to 80% of an area of the surface of the ceramic dielectric (3) assuming that the surface forms a continuous plane, and wherein, as seen in cross-section perpendicular to the surface (21) of the ceramic dielectric (3), the angle of said edge (9) formed by the surface (21) of the ceramic dielectric (3) and the side surface of the groove (5) and/or the recess (6) is 80 to 100 degrees.

2. The plasma generating electrode according to claim 1, wherein each of the grooves (5) and/or the recesses (6) has a thickness from the surface of the ceramic dielectric to a bottom of the groove (5) and/or the recess (6) of 3 to 200 µm.

3. The plasma generating electrode according to claim 1 or 2, wherein each of the grooves (5) and/or the recesses (6) has a thickness from the surface of the ceramic dielectric to a bottom of the groove and/or the recess of 1/3 or less of the average thickness of the ceramic dielectric.

4. A plasma reactor comprising the plasma generating electrode according to any of claims 1 to 3, and a casing (12) having a passage (gas passage) for a gas containing a specific component formed therein, wherein, when the gas is introduced into the gas passage of the casing, the specific component contained in the gas can be reacted using plasma generated by the plasma generating electrode.

5. The plasma reactor according to claim 4, further comprising a pulsed power supply for applying a voltage to the plasma generating electrode.

6. The plasma reactor according to claim 5, wherein the pulsed power supply includes at least one SI thyristor.

7. A method of manufacturing a plasma generating electrode according to claim 1 including at least the method comprising forming a ceramic raw material in a shape of a plate to obtain a plurality of unfired ceramic formed bodies, disposing a conductive film on one surface of a specific unfired ceramic formed body of the resulting unfired ceramic formed bodies to obtain a conductive-film-containing ceramic formed body, stacking the other unfired ceramic formed body on the resulting conductive-film-containing ceramic formed body so that the conductive film is covered to obtain a plate-shaped unit electrode precursor, forming a plurality of grooves and/or a plurality of recesses in at least one surface of the resulting unit electrode precursor to obtain a groove and/or recess-containing unit electrode precursor having a plurality of grooves and/or a plurality of recesses in at least one surface, firing the resulting groove and/or recess-containing unit electrode precursor to obtain a groove and/or recess-containing unit electrode (2) including a plate-shaped ceramic dielectric (3) having a plurality of grooves (5) and/or a plurality of recesses (6) in at least one surface and a conductive film (4) disposed inside the ceramic dielectric, and disposing the resulting groove and/or recess-containing unit electrode to be at least one of the unit electrodes of the plasma generating electrode,
wherein the grooves (5) and/or the recesses (6) are formed in an area corresponding to 20 to 80% of an area of the surface of the ceramic dielectric (3) assuming that the surface forms a continuous plane, and wherein, as seen in cross-section perpendicular to the surface (21) of the ceramic dielectric (3), the angle of said edge (9) formed by the surface (21) of the ceramic dielectric (3) and the side surface of the groove (5) and/or the recess (6) is 80 to 100 degrees.

8. A method of manufacturing a plasma generating electrode according to claim 1, the method comprising forming a ceramic raw material in a shape of a plate to obtain a plurality of unfired ceramic formed bodies, forming a plurality of grooves and/or a plurality of recesses in at least one surface of a specific unfired ceramic formed body of the resulting unfired ceramic formed bodies and disposing a conductive film on the other surface to obtain a groove and/or recess-containing conductive-film-containing ceramic formed body, stacking the other unfired ceramic formed body on the resulting groove and/or recess-containing conductive-film-containing ceramic formed body so that the conductive film is covered to obtain a plate-shaped unit electrode precursor, forming a plurality of grooves and/or a plurality of recesses in at least one surface of the resulting unit electrode precursor to obtain a groove and/or recess-containing unit electrode precursor having a plurality of grooves and/or a plurality of recesses in at least one surface, firing the resulting groove and/or recess-containing unit electrode precursor to obtain a groove and/or recess-containing unit electrode (2) including a plate-shaped ceramic dielectric (3) having a plurality of grooves (5) and/or a plurality of recesses(6) in at least one surface and a conductive film (4) disposed inside the ceramic dielectric, and disposing the resulting groove and/or recess-containing unit electrode (2) to be at least one of the unit electrodes of the plasma generating electrode,
wherein the grooves (5) and/or the recesses (6) are formed in an area corresponding to 20 to 80% of an area of the surface of the ceramic dielectric (3) assuming that the surface forms a continuous plane, and wherein, as seen in cross-section perpendicular to the surface (21) of the ceramic dielectric (3), the angle of said edge (9) formed by the surface (21) of the ceramic dielectric (3) and the side surface of the groove (5) and/or the recess (6) is 80 to 100 degrees.

9. A method of manufacturing a plasma generating electrode according to claim 1, the method comprising forming a ceramic raw material in a shape of a plate to obtain a plurality of unfired ceramic formed bodies, disposing a conductive film on one surface of a specific unfired ceramic formed body of the resulting unfired ceramic formed bodies to obtain a conductive-film-containing ceramic formed body, stacking the other unfired ceramic formed body on the resulting conductive-film-containing ceramic formed body so that the conductive film is covered to obtain a plate-shaped unit electrode precursor, firing the resulting unit electrode precursor and then forming a plurality of grooves and/or a plurality of recesses in at least one surface of the resulting unit electrode precursor to obtain a groove and/or recess-containing unit electrode (2) including a plate-shaped ceramic dielectric (3) having a plurality of grooves (5) and/or a plurality of recesses (6) in at least one surface and a conductive film (4) disposed inside the ceramic dielectric, and disposing the resulting groove and/or recess-containing unit electrode (2) to be at least one of the unit electrodes of the plasma generating electrode,
wherein the grooves (5) and/or the recesses (6) are formed in an area corresponding to 20 to 80% of an area of the surface of the ceramic dielectric (3) assuming that the surface forms a continuous plane, and wherein, as seen in cross-section perpendicular to the surface (21) of the ceramic dielectric (3), the angle of said edge (9) formed by the surface (21) of the ceramic dielectric (3) and the side surface of the groove (5) and/or the recess (6) is 80 to 100 degrees.

10. A method of manufacturing a plasma generating electrode according to claim l, the method comprising forming a ceramic raw material in a shape of a plate to obtain a plurality of unfired ceramic formed bodies, disposing a conductive film having a plurality of openings formed therethrough in its thickness direction on one surface of a specific unfired ceramic formed body of the resulting unfired ceramic formed bodies to obtain a conductive-film-containing ceramic formed body, stacking the other unfired ceramic formed body on the resulting conductive-film-containing ceramic formed body so that the conductive film is covered to obtain a plate-shaped unit electrode precursor, firing the resulting unit electrode precursor to obtain a groove and/or recess-containing unit electrode (2) including a plate-shaped ceramic dielectric (3) having a plurality of grooves (5) and/or a plurality of recesses (6) corresponding to a shape of the openings in the conductive film disposed on the unfired ceramic formed body in at least one surface and a conductive film (4) disposed inside the ceramic dielectric, and disposing the resulting groove and/or recess-containing unit electrode to be at least one of the unit electrodes (2) of the plasma generating electrode,
wherein the grooves (5) and/or the recesses (6) are formed in an area corresponding to 20 to 80% of an area of the surface of the ceramic dielectric (3) assuming that the surface forms a continuous plane, and wherein, as seen in cross-section perpendicular to the surface (21) of the ceramic dielectric (3), the angle of said edge (9) formed by the surface (21) of the ceramic dielectric (3) and the side surface of the groove (5) and/or the recess (6) is 80 to 100 degrees.

## Patentansprüche

1. Plasmaerzeugungselektrode, die zumindest zwei plattenförmige Einheitselektroden (2) umfasst, die einander jeweils zugewandt sind und in der Lage sind, bei Anlegen einer Spannung zwischen den Einheitselektroden Plasma zu erzeugen, wobei zumindest eine der Einheitselektroden Folgendes umfasst: ein plattenförmiges Keramikdielektrikum (3) mit einer Vielzahl von Rillen (5) und/oder einer Vielzahl von Vertiefungen (6), die in zumindest einer Oberfläche ausgebildet sind, und einen leitfähigen Film (4), der im Inneren des Keramikdielektrikums angeordnet ist, wobei die Plasmaerzeugungselektrode somit in der Lage ist, nahe der Ränder (9), die durch eine Oberfläche des Keramikdielektrikums (3) und Seitenflächen der Rillen (5) und/oder die Vertiefungen (6) gebildet sind, bei Anlegen von Spannung zwischen den Einheitselektroden ein hochdichtes Plasma zu erzeugen, wobei das hochdichte Plasma eine höhere Dichte aufweist als das zwischen den Einheitselektroden in einem anderen Bereich als in der Nähe der Ränder erzeugte Plasma,
wobei die Rillen (5) und/oder die Vertiefungen (6) in einem Bereich ausgebildet sind, der 20 bis 80 % der Fläche der Oberfläche des Keramikdielektrikums (3) entspricht, wenn angenommen wird, dass die Oberfläche eine durchgehende Ebene bildet, und wobei bei Betrachtung in einem Querschnitt im rechten Winkel auf die Oberfläche (21) des Keramikdielektrikums (3) der Winkel des durch die Oberfläche (21) des Dielektrikums (3) und die Seitenfläche der Rille (5) und/oder der Vertiefung (6) gebildeten Rands (9) 80 bis 100° beträgt.

2. Plasmaerzeugungselektrode nach Anspruch 1, worin jede der Rillen (5) und/oder Vertiefungen (6) von der Oberfläche des Keramikdielektrikums zum Boden der Rille (5) und/oder der Vertiefung (6) eine Dicke von 3 bis 200 µm aufweist.

3. Plasmaerzeugungselektrode nach Anspruch 1 und 2, worin jede der Rillen (5) und/oder Vertiefungen (6) von der Oberfläche des Keramikdielektrikums zum Boden der Rille (5) und/oder der Vertiefung (6) eine Dicke aufweist, die einem Drittel der durchschnittlichen Dicke des Keramikdielektrikums entspricht oder geringer ist.

4. Plasmareaktor, der eine Plasmaerzeugungselektrode nach einem der Ansprüche 1 bis 3 und ein Gehäuse (12) mit einem Durchlass (Gasdurchlass) für ein Gas, das eine darin ausgebildete spezifische Komponente enthält, umfasst, worin bei Einbringen des Gases in den Gasdurchlass des Gehäuses die in dem Gas enthaltene spezifische Komponente unter Verwendung des durch die Plasmaerzeugungselektrode erzeugten Plasmas umgesetzt werden kann.

5. Plasmareaktor nach Anspruch 4, der ferner eine Impulsspannungsquelle zum Anlegen einer Spannung an die Plasmaerzeugungselektrode umfasst.

6. Plasmareaktor nach Anspruch 5, worin die Impulsspannungsquelle zumindest einen SI-Thyristor umfasst.

7. Verfahren zur Herstellung einer Plasmaerzeugungselektrode nach Anspruch 1, das zumindest ein Verfahren umfasst, das Folgendes umfasst: das Formen eines Keramikrohmaterials in Plattenform, um eine Vielzahl ungebrannter Keramikformkörper zu erhalten; das Aufbringen eines leitfähigen Films auf eine Oberfläche eines bestimmten ungebrannten Keramikformkörpers der resultierenden ungebrannten Keramikformkörper, um einen Keramikformkörper mit leitfähigem Film zu erhalten; das Übereinanderschichten der anderen ungebrannten Keramikformkörper auf dem resultierenden Keramikformkörper mit leitfähigem Film, so dass der leitfähige Film bedeckt ist, um einen plattenförmigen Einheitselektrodenvorläufer zu erhalten; das Ausbilden einer Vielzahl von Rillen und/oder einer Vielzahl von Vertiefungen in zumindest einer Oberfläche des resultierenden Einheitselektrodenvorläufers, um einen Rillen und/oder Vertiefungen umfassenden Einheitselektrodenvorläufer zu erhalten, der auf zumindest einer Oberfläche eine Vielzahl von Rillen und/oder eine Vielzahl von Vertiefungen aufweist; das Brennen des resultierenden Rillen und/oder Vertiefungen aufweisenden Einheitselektrodenvorläufers, um eine Rillen und/oder Vertiefungen aufweisende Einheitselektrode (2) zu erhalten, die ein plattenförmiges Keramikdielektrikum (3) mit einer Vielzahl von Rillen (5) und/oder eine Vielzahl von Vertiefungen (6) in zumindest einer Oberfläche und einem im Inneren des Keramikdielektrikums angeordneten leitfähigen Film (4) umfasst; und das Anordnen der resultierenden Rillen und/oder Vertiefungen umfassenden Einheitselektrode als zumindest eine der Einheitselektroden der Plasmaerzeugungselektroden,
wobei die Rillen (5) und/oder die Vertiefungen (6) in einem Bereich ausgebildet sind, der 20 bis 80 % der Fläche der Oberfläche des Keramikdielektrikums (3) entspricht, wenn angenommen wird, dass die Oberfläche eine durchgehende Ebene bildet, und wobei bei Betrachtung in einem Querschnitt im rechten Winkel auf die Oberfläche (21) des Keramikdielektrikums (3) der Winkel des durch die Oberfläche (21) des Dielektrikums (3) und die Seitenfläche der Rille (5) und/oder der Vertiefung (6) gebildeten Rands (9) 80 bis 100° beträgt.

8. Verfahren zur Herstellung einer Plasmaerzeugungselektrode nach Anspruch 1, wobei das Verfahren Folgendes umfasst: das Formen eines Keramikrohmaterials in Plattenform, um eine Vielzahl ungebrannter Keramikformkörper zu erhalten; das Ausbilden einer Vielzahl von Rillen und/oder einer Vielzahl von Vertiefungen in zumindest einer Oberfläche eines bestimmten ungebrannten Keramikformkörpers der resultierenden ungebrannten Keramikformkörper und das Aufbringen eines leitfähigen Films auf der anderen Oberfläche, um einen Rillen und/oder Vertiefungen und einen leitfähigen Film umfassenden Keramikformkörper zu erhalten; das Übereinanderschichten der anderen ungebrannten Keramikformkörper auf dem resultierenden Rillen und/oder Vertiefungen und einen leitfähigen Film umfassenden Keramikformkörper, so dass der leitfähige Film bedeckt ist, um einen plattenförmigen Einheitselektrodenvorläufer zu erhalten; das Ausbilden einer Vielzahl von Rillen und/oder Vertiefungen in zumindest einer Oberfläche des resultierenden Einheitselektrodenvorläufers, um einen Rillen und/oder Vertiefungen umfassenden Einheitselektrodenvorläufer zu erhalten, der auf zumindest einer Oberfläche eine Vielzahl von Rillen und/oder eine Vielzahl von Vertiefungen aufweist; das Brennen des resultierenden Rillen und/oder Vertiefungen aufweisenden Einheitselektrodenvorläufers, um eine Rillen und/oder Vertiefungen aufweisende Einheitselektrode (2) zu erhalten, die ein plattenförmiges Keramikdielektrikum (3) mit einer Vielzahl von Rillen (5) und/oder eine Vielzahl von Vertiefungen (6) in zumindest einer Oberfläche und einem im Inneren des Keramikdielektrikums angeordneten leitfähigen Film (4) umfasst; und das Anordnen der resultierenden Rillen und/oder Vertiefungen umfassenden Einheitselektrode als zumindest eine der Einheitselektroden der Plasmaerzeugungselektroden,
wobei die Rillen (5) und/oder die Vertiefungen (6) in einem Bereich ausgebildet sind, der 20 bis 80 % der Fläche der Oberfläche des Keramikdielektrikums (3) entspricht, wenn angenommen wird, dass die Oberfläche eine durchgehende Ebene bildet, und wobei bei Betrachtung in einem Querschnitt im rechten Winkel auf die Oberfläche (21) des Keramikdielektrikums (3) der Winkel des durch die Oberfläche (21) des Dielektrikums (3) und die Seitenfläche der Rille (5) und/oder der Vertiefung (6) gebildeten Rands (9) 80 bis 100° beträgt.

9. Verfahren zur Herstellung einer Plasmaerzeugungselektrode nach Anspruch 1, wobei das Verfahren Folgendes umfasst: das Formen eines Keramikrohmaterials in Plattenform, um eine Vielzahl ungebrannter Keramikformkörper zu erhalten; das Aufbringen eines leitfähigen Films auf eine Oberfläche eines bestimmten ungebrannten Keramikformkörpers der resultierenden ungebrannten Keramikformkörper, um einen Keramikformkörper mit leitfähigem Film zu erhalten; das Übereinanderschichten der anderen ungebrannten Keramikformkörper auf dem resultierenden Keramikformkörper mit leitfähigem Film, so dass der leitfähige Film bedeckt ist, um einen plattenförmigen Einheitselektrodenvorläufer zu erhalten; das Brennen des resultierenden Einheitselektrodenvorläufers und anschließend das Ausbilden einer Vielzahl von Rillen und/oder einer Vielzahl von Vertiefungen in zumindest einer Oberfläche des resultierenden Einheitselektrodenvorläufers, um eine Rillen und/oder Vertiefungen aufweisende Einheitselektrode (2) zu erhalten, die ein plattenförmiges Keramikdielektrikum (3) mit einer Vielzahl von Rillen (5) und/oder eine Vielzahl von Vertiefungen (6) in zumindest einer Oberfläche und einem im Inneren des Keramikdielektrikums angeordneten leitfähigen Film (4) umfasst; und das Anordnen der resultierenden Rillen und/oder Vertiefungen umfassenden Einheitselektrode als zumindest eine der Einheitselektroden der Plasmaerzeugungselektroden,
wobei die Rillen (5) und/oder die Vertiefungen (6) in einem Bereich ausgebildet sind, der 20 bis 80 % der Fläche der Oberfläche des Keramikdielektrikums (3) entspricht, wenn angenommen wird, dass die Oberfläche eine durchgehende Ebene bildet, und wobei bei Betrachtung in einem Querschnitt im rechten Winkel auf die Oberfläche (21) des Keramikdielektrikums (3) der Winkel des durch die Oberfläche (21) des Dielektrikums (3) und die Seitenfläche der Rille (5) und/oder der Vertiefung (6) gebildeten Rands (9) 80 bis 100° beträgt.

10. Verfahren zur Herstellung einer Plasmaerzeugungselektrode nach Anspruch 1, wobei das Verfahren Folgendes umfasst: das Formen eines Keramikrohmaterials in Plattenform, um eine Vielzahl ungebrannter Keramikformkörper zu erhalten; das Aufbringen eines leitfähigen Films mit einer Vielzahl von Öffnungen, die in Dickerichtung durch diesen hindurch verlaufen, auf eine Oberfläche eines bestimmten ungebrannten Keramikformkörpers der resultierenden ungebrannten Keramikformkörper, um einen Keramikformkörper mit leitfähigem Film zu erhalten; das Übereinanderschichten der anderen ungebrannten Keramikformkörper auf dem resultierenden Keramikformkörper mit leitfähigem Film, so dass der leitfähige Film bedeckt ist, um einen plattenförmigen Einheitselektrodenvorläufer zu erhalten; das Brennen des resultierenden Einheitselektrodenvorläufers, um eine Rillen und/oder Vertiefungen aufweisende Einheitselektrode (2) zu erhalten, die ein plattenförmiges Keramikdielektrikum (3) mit einer Vielzahl von Rillen (5) und/oder eine Vielzahl von Vertiefungen (6) umfasst, die der Form der Öffnungen in dem auf dem ungebrannten Keramikformkörper in zumindest einer Oberfläche und einem im Inneren des Keramikdielektrikums angeordneten leitfähigen Film (4) entspricht; und das Anordnen der resultierenden Rillen und/oder Vertiefungen umfassenden Einheitselektrode als zumindest eine der Einheitselektroden der Plasmaerzeugungselektroden,
wobei die Rillen (5) und/oder die Vertiefungen (6) in einem Bereich ausgebildet sind, der 20 bis 80 % der Fläche der Oberfläche des Keramikdielektrikums (3) entspricht, wenn angenommen wird, dass die Oberfläche eine durchgehende Ebene bildet, und wobei bei Betrachtung in einem Querschnitt im rechten Winkel auf die Oberfläche (21) des Keramikdielektrikums (3) der Winkel des durch die Oberfläche (21) des Dielektrikums (3) und die Seitenfläche der Rille (5) und/oder der Vertiefung (6) gebildeten Rands (9) 80 bis 100° beträgt.

## Revendications

1. Electrode de génération de plasma comprenant au moins deux électrodes unitaires en forme de plaques (2) chacune faisant face à l'autre et qui sont capables de générer du plasma lors de l'application d'une tension entre les électrodes unitaires, au moins l'une des électrodes unitaires comprenant un diélectrique en céramique en forme de plaque (3) comportant une pluralité de rainures (5) et/ou une pluralité d'évidements (6) formés dans au moins une surface, et un film conducteur (4) disposé à l'intérieur du diélectrique en céramique, l'électrode de génération de plasma étant ainsi capable de générer un plasma à haute densité dans le voisinage des bords (9) formés par une surface du diélectrique en céramique (3) et les surfaces latérales des rainures (5) et/ou les évidements (6) lors de l'application d'une tension entre les électrodes unitaires, le plasma à haute densité ayant une densité supérieure à celle d'un plasma généré entre les électrodes unitaires dans une zone autre que le voisinage des bords,
dans laquelle les rainures (5) et/ou les évidements (6) sont formés dans une zone correspondant à 20 à 80 % d'une aire de la surface du diélectrique en céramique (3) en supposant que la surface forme un plan continu, et dans laquelle, tel que vu en coupe transversale perpendiculaire à la surface (21) du diélectrique en céramique (3), l'angle dudit bord (9) formé par la surface (21) du diélectrique en céramique (3) et la surface latérale de la rainure (5) et/ou de l'évidement (6) est de 80 à 100 degrés.

2. Electrode de génération de plasma selon la revendication 1, dans laquelle chacune des rainures (5) et/ou chacun des évidements (6) a une épaisseur de la surface du diélectrique en céramique jusqu'à un fond de la rainure (5) et/ou de l'évidement (6) de 3 à 200 µm.

3. Electrode de génération de plasma selon la revendication 1 ou 2, dans laquelle chacune des rainures (5) et/ou chacun des évidements (6) a une épaisseur de la surface du diélectrique en céramique jusqu'à un fond de la rainure et/ou de l'évidement égale à 1/3 ou moins de l'épaisseur moyenne du diélectrique en céramique.

4. Réacteur à plasma comprenant l'électrode de génération de plasma selon l'une quelconque des revendications 1 à 3, et un carter (12) comportant un passage (passage de gaz) pour un gaz contenant un composant spécifique formé dans celui-ci, dans lequel, lorsque le gaz est introduit dans le passage de gaz du carter, le composant spécifique contenu dans le gaz peut réagir en utilisant le plasma généré par l'électrode de génération de plasma.

5. Réacteur à plasma selon la revendication 4, comprenant en outre une alimentation pulsée pour appliquer une tension à l'électrode de génération de plasma.

6. Réacteur à plasma selon la revendication 5, dans lequel l'alimentation pulsée comprend au moins un thyristor SI.

7. Procédé de fabrication d'une électrode de génération de plasma selon la revendication 1, comprenant au moins le procédé consistant à former une matière première à base de céramique en la forme d'une plaque pour obtenir une pluralité de corps formés en céramique non cuite, disposer un film conducteur sur une surface d'un corps formé en céramique non cuite spécifique parmi les corps formés en céramique non cuite résultants pour obtenir un corps formé en céramique contenant un film conducteur, empiler l'autre corps formé en céramique non cuite sur le corps formé en céramique contenant un film conducteur résultant de sorte que le film conducteur soit recouvert pour obtenir un précurseur d'électrode unitaire en forme de plaque, former une pluralité de rainures et/ou une pluralité d'évidements dans au moins une surface du précurseur d'électrode unitaire résultant pour obtenir un précurseur d'électrode unitaire contenant des rainures et/ou des évidements comportant une pluralité de rainures et/ou une pluralité d'évidements dans au moins une surface, cuire le précurseur d'électrode unitaire contenant des rainures et/ou des évidements résultant pour obtenir l'électrode unitaire contenant des rainures et/ou des évidements (2) comprenant un diélectrique en céramique en forme de plaque (3) comportant une pluralité de rainures (5) et/ou une pluralité d'évidements (6) dans au moins une surface et un film conducteur (4) disposé à l'intérieur du diélectrique en céramique, et disposer l'électrode unitaire contenant des rainures et/ou des évidements résultante pour qu'elle soit au moins l'une des électrodes unitaires de l'électrode de génération de plasma,
dans lequel les rainures (5) et/ou les évidements (6) sont formés dans une zone correspondant à 20 à 80 % d'une aire de la surface du diélectrique en céramique (3) en supposant que la surface forme un plan continu, et dans lequel, tel que vu en coupe transversale perpendiculaire à la surface (21) du diélectrique en céramique (3), l'angle dudit bord (9) formé par la surface (21) du diélectrique en céramique (3) et la surface latérale de la rainure (5) et/ou de l'évidement (6) est de 80 à 100 degrés.

8. Procédé de fabrication d'une électrode de génération de plasma selon la revendication 1, le procédé consistant à former une matière première à base de céramique en la forme d'une plaque pour obtenir une pluralité de corps formés en céramique non cuite, former une pluralité de rainures et/ou une pluralité d'évidements dans au moins une surface d'un corps formé en céramique non cuite spécifique parmi les corps formés en céramique non cuite résultants et disposer un film conducteur sur l'autre surface pour obtenir un corps formé en céramique contenant un film conducteur contenant des rainure et/ou des évidements, empiler l'autre corps formé en céramique non cuite sur le corps formé en céramique contenant un film conducteur contenant des rainures et/ou des évidements résultant de sorte que le film conducteur soit recouvert pour obtenir un précurseur d'électrode unitaire en forme de plaque, former une pluralité de rainures et/ou une pluralité d'évidements dans au moins une surface du précurseur d'électrode unitaire résultant pour obtenir un précurseur d'électrode unitaire contenant des rainures et/ou des évidements comportant une pluralité de rainures et/ou une pluralité d'évidements dans au moins une surface, cuire le précurseur d'électrode unitaire contenant des rainures et/ou des évidements résultant pour obtenir une électrode unitaire contenant des rainures et/ou des évidements (2) comprenant un diélectrique en céramique en forme de plaque (3) comportant une pluralité de rainures (5) et/ou une pluralité d'évidements (6) dans au moins une surface et un film conducteur (4) disposé à l'intérieur du diélectrique en céramique, et disposer l'électrode unitaire contenant des rainures et/ou des évidements (2) résultante pour qu'elle soit au moins l'une des électrodes unitaires de l'électrode de génération de plasma,
dans lequel les rainures (5) et/ou les évidements (6) sont formés dans une zone correspondant à 20 à 80 % d'une aire de la surface du diélectrique en céramique (3) en supposant que la surface forme un plan continu, et dans lequel, tel que vu en coupe transversale perpendiculaire à la surface (21) du diélectrique en céramique (3), l'angle dudit bord (9) formé par la surface (21) du diélectrique en céramique (3) et la surface latérale de la rainure (5) et/ou de l'évidement (6) est de 80 à 100 degrés.

9. Procédé de fabrication d'une électrode de génération de plasma selon la revendication 1, le procédé consistant à former une matière première à base de céramique en la forme d'une plaque pour obtenir une pluralité de corps formés en céramique non cuite, disposer un film conducteur sur une surface d'un corps formé en céramique non cuite spécifique parmi les corps formés en céramique non cuite résultants pour obtenir un corps formé en céramique contenant un film conducteur, empiler l'autre corps formé en céramique non cuite sur le corps formé en céramique contenant un film conducteur résultant de sorte que le film conducteur soit recouvert pour obtenir un précurseur d'électrode unitaire en forme de plaque, cuire le précurseur d'électrode unitaire résultant et former ensuite une pluralité de rainures et/ou une pluralité d'évidements dans au moins une surface du précurseur d'électrode unitaire résultant pour obtenir une électrode unitaire contenant des rainures et/ou des évidements (2) comprenant un diélectrique en céramique en forme de plaque (3) comportant une pluralité de rainures (5) et/ou une pluralité d'évidements (6) dans au moins une surface et un film conducteur (4) disposé à l'intérieur du diélectrique en céramique, et disposer l'électrode unitaire contenant des rainures et/ou des évidements (2) résultante pour qu'elle soit au moins l'une des électrodes unitaires de l'électrode de génération de plasma,
dans lequel les rainures (5) et/ou les évidements (6) sont formés dans une zone correspondant à 20 à 80 % d'une aire de la surface du diélectrique en céramique (3) en supposant que la surface forme un plan continu, et dans lequel, tel que vu en coupe transversale perpendiculaire à la surface (21) du diélectrique en céramique (3), l'angle dudit bord (9) formé par la surface (21) du diélectrique en céramique (3) et la surface latérale de la rainure (5) et/ou de l'évidement (6) est de 80 à 100 degrés.

10. Procédé de fabrication d'une électrode de génération de plasma selon la revendication 1, le procédé consistant à former une matière première à base de céramique en la forme d'une plaque pour obtenir une pluralité de corps formés en céramique non cuite, disposer un film conducteur comportant une pluralité d'ouvertures formées à travers celui-ci dans sa direction d'épaisseur sur une surface d'un corps formé en céramique non cuite spécifique parmi les corps formés en céramique non cuite résultants pour obtenir un corps formé en céramique contenant un film conducteur, empiler l'autre corps formé en céramique non cuite sur le corps formé en céramique contenant un film conducteur résultant de sorte que le film conducteur soit recouvert pour obtenir un précurseur d'électrode unitaire en forme de plaque, cuire le précurseur d'électrode unitaire résultant pour obtenir une électrode unitaire contenant des rainures et/ou des évidements (2) comprenant un diélectrique en céramique en forme de plaque (3) comportant une pluralité de rainures (5) et/ou une pluralité d'évidements (6) correspondant à une forme des ouvertures dans le film conducteur disposé sur le corps formé en céramique non cuite dans au moins une surface et un film conducteur (4) disposé à l'intérieur du diélectrique en céramique, et disposer l'électrode unitaire contenant des rainures et/ou des évidements résultante pour qu'elle soit au moins l'une des électrodes unitaires (2) de l'électrode de génération de plasma,
dans lequel les rainures (5) et/ou les évidements (6) sont formés dans une zone correspondant à 20 à 80 % d'une aire de la surface du diélectrique en céramique (3) en supposant que la surface forme un plan continu, et dans lequel, tel que vu en coupe transversale perpendiculaire à la surface (21) du diélectrique en céramique (3), l'angle dudit bord (9) formé par la surface (21) du diélectrique en céramique (3) et la surface latérale de la rainure (5) et/ou de l'évidement (6) est de 80 à 100 degrés.
